# EUROPÄISCHE PATENTSCHRIFT

(11) **EP 0 511 195 B1**
(45) Veröffentlichungstag und Bekanntmachung des Hinweises auf die Patenterteilung: **26.10.1994**
(21) Anmeldenummer: 92890089.3
(22) Anmeldetag: 09.04.1992
(51) Int. Cl.: C21C 5/56, C22B 1/00

(54) **Verfahren zum kontinuierlichen Einschmelzen von Shredderschrott und Mischschrott**
Process for continuous melting of shredded scrap and mixed scrap
Procédé pour la fusion continue de ferraille déchiquetée et de ferraille mixte

(30) Priorität: 17.04.1991 AT 805/91
(43) Veröffentlichungstag der Anmeldung: 28.10.1992
(73) Patentinhaber: VOEST-ALPINE INDUSTRIEANLAGENBAU GMBH, 4020 Linz (AT); MERCEDES-BENZ AG, 70327 Stuttgart (DE)
(72) Erfinder: Nieder, Wolfgang, Dipl.-Ing., A-4040 Linz (AT); Seirlehner, Leo, Dipl.-Ing., A-4040 Linz (AT); Köller, Otto, Dipl.-Ing., A-8704 Leoben (AT); Perchtold, Gerhard, A-1050 Wien (AT)
(74) Vertreter: Haffner, Thomas M., Dr.

(56) Entgegenhaltungen:
- EP-A- 0 030 344
- EP-A- 0 470 066
- DE-B- 2 504 889
- GB-A- 1 294 927

## Beschreibung

Die Erfindung bezieht sich auf ein Verfahren zum kontinuierlichen Einschmelzen von Shredderschrott und Mischschrott unter Einsatz von Shredderschwer- und Shredderleichtfraktionen.

Aus der DE-PS 25 04 889 ist ein Verfahren zum kontinuierlichen Einschmelzen von Schrott, Eisenschwamm, Roheisen od.dgl. bekanntgeworden, bei welchem Schrott in einem Schachtofen un-ter Verwendung von Erdgas-Sauerstoff-Brennern kontinuierlich geschmolzen wird. Für einen derartigen Schmelzprozeß ist ein relativ hoher Energieaufwand erforderlich, um eine Hochtemperaturschmelzzone zu schaffen. Insbesondere bei Mischschrott und Shredderschrott muß teilweise bei sehr hohen Temperaturen geschmolzen werden, um eine vollständige Schmelzreaktion sicherzustellen.

Aus der EP-A-0 470 066 ist ein Verfahren zum Erschmelzen von Stahl aus Schrott und/oder metallhaltigen, müllähnlichen Stoffen bekanntgeworden, bei welchem Verfahren die eingetragenen Metallträger in einem Festbett vorgewärmt und aufgeschmolzen werden, wobei gleichzeitig sauerstoffhaltige Gase über wenigstens eine Sekundärdüsenebene in dem Bereich des Festbettes und/oder oberhalb desselben eingedüst werden. Die Abgase des Schmelzprozesses werden einem Thermoreaktor zugeführt und erhitzt worauf sie einer Gasreinigung unterworfen werden.

Altautos und metallhältige Konsumgüter werden üblicherweise einem Shredder zugeführt, wobei in der Folge eine Trennung in eine leichte und eine schwere Fraktion erfolgt. Die Shredderschwerfraktion enthält Metalle, welche teilweise bei relativ hoher Temperatur neuerlich aufgeschmolzen werden können und auf diese Weise rückgewonnen und wiederverwertet werden können. Der bei der Aufarbeitung derartiger Konsumgüter, insbesondere Altfahrzeugen, anfallende Shreddermüll bzw. die Shredderleichtfraktion konnte in den bisher bekannten Verfahren zum Anfschmelzen von Shredderschrott nicht verwertet wer-den und mußte bisher deponiert werden.

Die Erfindung zielt nun darauf ab, ein Verfahren der eingangs genannten Art zu schaffen, bei welcher auch Shredderleichtfraktionen aufgearbeitet werden können, wobei gleichzeitig der Energieaufwand für einen Hochtemperaturschmelzreaktor herabgesetzt werden kann und die erforderlichen metallurgischen Bedingungen, insbesondere die Schlackentemperatur und die Badtemperatur, trotz der vergleichsweise hohen Schmelztemperaturen leichter beherrscht werden können. Zur Lösung dieser Aufgabe wird erfindungsgemäß vorgeschlagen, daß die Shredderleichtfraktion einer Vergasung unterworfen wird und daß die Prozeßgase dieser Vergasung oberhalb der Hauptbrennerebene eines Schmelzreaktors für die Shredderschwerfraktion und Mischschrott in den Schmelzreaktor eingeblasen werden. Dadurch, daß die Shredderleichtfraktion einem Vergasungsreaktor zugeführt wird, wird ein Produktgas erzielt, welches eine Reihe von Substanzen enthält, welche bei hohen Temperaturen unter Energieabgabe genutzt werden können. Im besonderen enthalten derartige Produktgase aus einem derartigen Vergaser Wasserstoff, Kohlenmonoxid, Wasserdampf, CO₂ sowie Kohlenwasserstoffe und durch ein Einblasen dieser Prozeßgase nahe der Hauptbrennerebene des Schmelzreaktors für die Shredderschwerfraktion, läßt sich insbesondere bei Hochtemperaturschmelzprozessen der Prozeß in der gewünschten Weise kühlen und das Eisenausbringen verbessern. Über dem Spiegel der Schlacke herrscht bei einem Hochtemperaturschmelzprozeß eine stark oxidierende Atmosphäre, da durch thermische Dissoziation ein hoher Sauerstoffpartialdruck entsteht. Durch Einblasen des Produktgases bzw. Prozeßgases der Vergasung in die Hochtemperaturschmelzzone können diese stark oxidierenden Bedingungen, welche das Eisenausbringen verringern, durch Kühlung und dadurch Zurückdrängen der thermischen Dissoziation wesentlich gemildert werden, wobei die gewünschten stöchiometrischen Bedingungen, insbesondere ein λ-Wert von etwa 0,9 durch Erdgaszusatz in einfacher Weise geregelt werden können. Das Produktgas bzw. Prozeßgas kühlt somit den Prozeß und senkt damit den Dissoziationsgrad bei gleichzeitiger Erhöhung des Kapazitätsstromes, so daß es gelingt, die Schlackentemperatur ent-sprechend zu begrenzen und gleichzeitig zumindest knapp über der Oxidationszone wieder reduzierende Bedingungen einzustellen, welche das Eisenausbringen verbessern.

In besonders einfacher Weise wird das erfindungsgemäße Verfahren so durchgeführt, daß die Prozeßgase der Vergasung über nach unten gerichtete Düsen eingeblasen werden, wobei die Einstellung der gewünschten reduzierenden Bedingungen durch Regelung der Erdgaszufuhr in einfacher Weise dadurch erzielt werden kann, daß die Prozeßgase durch ein Innenrohr der Brennerlanzen der Hauptbrennerebene zugeführt werden, wobei über eine konzentrische Ringdüse Verbrennungsluft bzw. Sauerstoff eingebracht und in einem Außenrohr Erdgas zur Einstellung unterstöchiometrischer Verbrennungsbedingungen zugeführt wird. Die Prozeßgase des Vergasers werden hiebei über am Umfang des Schmelzreaktors angeordnete Brenner zugeführt, wobei dadurch, daß das Erdgas im Außenrohr der Brennerlanzen eingebracht wird, das Oxidationspotential für unerwünschte schmelzmetallurgische Reaktionsvorgänge, wie z.B. Eisenabbrand verringert wird. Die chemische und latente Energie des Reaktionsgases der Shreddermüllvergasung kann auf diese Weise genützt werden, wobei gleichzeitig nach Vermischen mit den Prozeßgasen des Schmelzreaktors ein Abgas gewonnen wird, welches nach entsprechender Abgasbehandlung und physikalischer und chemischer Rauchgasreinigung entsorgt werden kann.

Zur weiteren Verbesserung der Energiebilanz kann das erfindungsgemäße Verfahren so durchgeführt werden, daß die flüssige Schlacke des Vergasungsreaktors unter Aufrechterhaltung einer Mindestmenge im Vergasungsreaktor abgezogen und gegebenenfalls granuliert wird. Die Wärme der Schlacke wird auf diese Weise zum Teil für die Vergasung des Shreddermülles mit herangezogen.

Für den Fall, daß im Shreddermüll Altreifen oder andere Einsatzmaterialien verwendet werden, welche in der Folge einen hohen Rußanteil ergeben, wird mit Vorteil das erfindungsgemäße Verfahren so durchgeführt, daß Dampf in den Vergasungsreaktor eingedüst wird. Dampf kann in diesem Falle bei Temperaturen von etwa 400°C und einem Druck zwischen 30 und 50 bar in den Vergaser eingedüst werden, wodurch der Rußanteil in Wassergas, nämlich Kohlenmonoxid und Wasserstoff, umgesetzt werden kann.

Um im Schmelzreaktor ein entsprechend hohes Eisenausbringen sicherzustellen und gleichzeitig in konventioneller Weise eine Schlackenseparation sowie einen Abstich von Bad und Schlacke durchführen zu können, wird mit Vorteil die Schlackenbasizität im Schmelzreaktor auf 1,8 bis 2,2, insbesondere etwa 2, eingestellt, sowie vorzugsweise die Schlackentemperatur im Schmelzreaktor höchstens 10°C über der Liquidus-Temperatur gehalten. Auf diese Weise wird trotz des Hochtemperaturschmelzverfahrens eine konventionelle Weiterbehandlung bzw. Raffination von Bad und Schlacke gewährleistet.

Die im Shreddermüllvergaser entstehende Schlacke kann mit Vorteil durch Granulieren zu Schlackensand mit einem Glaphasenanteil von bis zu 98 % glasiert werden, wodurch ein hohes Maß an Umweltverträglichkeit sichergestellt wird. Derartiger Schlackensand kann in der Folge zur Herstellung von Zement und als Zuschlagstoff in Beton verwendet werden.

Die Mitverwendung der Prozeßgase aus der Shreddermüllvergasung ermöglicht hiebei in erster Linie die Optimierung der Einschmelzbedingungen und insbesondere die gewünschte Rückdrängung der thermischen Dissoziation bei hohen Temperaturen unter gleichzeitiger Ausnutzung der in den Prozeßgasen enthaltenen Energie, wodurch das Schmelzverfahren insgesamt ökonomischer geführt werden kann und gleichzeitig die Möglichkeit geschaffen wird, auch Shredderleichtfraktionen, welche bisher verhaldet werden mußten, nunmehr in einen Aufarbeitungsprozeß einzubinden.

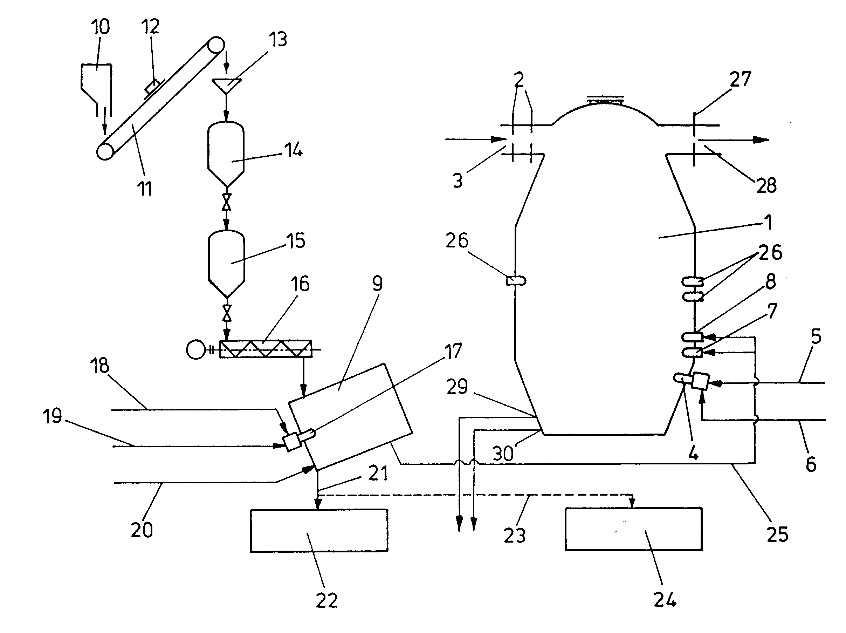

Das erfindungsgemäße Verfahren wird nachfolgend an Hand eines in der Zeichnung schematisch dargestellten Ausführungsbeispieles einer für die Durchführung des Verfahrens geeigneten Anlage näher erläutert.

In der Zeichnung ist mit 1 ein Vergasungsreaktor bezeichnet, in welchen über einen mit einer schematisch angedeuteten Doppelschleuse 2 vorgesehenen Eintrag 3 am oberen Ende des Reaktors 1 eine Mischfraktion von Shredderschrott und Mischschrott eingetragen wird. Die Mischschrottfraktion wird nahe dem Boden des Reaktors 1 mit Hilfe eines mit Erdgas und Luft betriebenen Brenners 4 aufgeschmolzen, wobei die Gaszuleitungen zu dem Brenner 4 mit 5 und 6 bezeichnet sind. Über der Hauptbrennerebene des Reaktors 1 sind weitere Brenner 7 und 8 angeordnet, welche unterstöchiometrisch mit den Prozeßgasen aus der Vergasung einer Shredderleichtfraktion betrieben werden.

Die Vergasung der Shredderleichtfraktion erfolgt in einem Vergasungsreaktor 9, in welchen die vorbehandelte Shredderleichtfraktion eingebracht wird. Die Shredderleichtfraktion wird bei ihrer Vorbehandlung aus einem Vorratsbehälter 10 über einen Förderer 11, welcher mit einem Magnetscheider 12 versehen ist, in einen Trichter 13 eingebracht und von diesem über ein Doppel-schleusensystem 14, 15 einer Zerkleinerungseinrichtung 16 zugeführt. Die zerkleinerte Shredderleichtfraktion wird dann in den Vergasungsreaktor 9 eingebracht. Der Vergasungsreaktor wird hiebei für die Vergasung der Shredderleichtfraktion mit einem Sauerstoff-Erdgas-Brenner 17 betrieben, wobei die Gaszuführungen für Sauerstoff und Erdgas mit 18 und 19 bezeichnet sind. Gegebenenfalls für die Vergasung zusätzlich benötigte Brennluft wird über eine Leitung 20 dem Vergasungsreaktor 9 zugeführt. Die Produkte der Vergasung der Shredderleichtfraktion werden über den Austrag 21 aus dem Vergasungsreaktor 9 ausgetragen und die nicht weiter verwertbaren Schlackenanteile einer schematisch angedeuteten Schlackengranulation 22 zugeführt. Gegebenenfalls noch weiter verwertbare Teile der Shredderleichtfraktion, welche aus dem Raffinator 9 ausgetragen wurden, werden über eine Zweigleitung 23 der Austragsleitung 21 einem Raffinator 24 zugeführt. Über eine Leitung 25 werden die brennbaren Gase, welche in dem Vergasungsreaktor 9 gewonnen werden, den unterstöchiometrischen Brennern 7 und 8 des Schmelzreaktors 1 zugeführt. Der Schmelzreaktor 1 weist über der Ebene der unterstöchiometrisch betrie-benen Brenner 7 und 8 eine Sekundärluftebene auf, wobei die gegebenenfalls in verschiedenen Höhen angeordneten Sekundärluftdüsen in der Zeichnung schematisch mit 26 bezeichnet sind. In dem Schmelzreaktor werden im Bereich der Hauptbrennebene extrem hohe Temperaturen erreicht und es werden auf Grund der Zuführung der Gase aus dem Vergasungsreaktor 9 über die unterstöchiometrischen Brenner 7 und 8 in der Schmelzzone geringfügig unterstöchiometrische Bedingungen aufrechterhalten. Die bei dem Aufschmelzen des Mischschrottes bzw. Shredderschrottes entstandenen Abgase werden in der Folge am Kopf des Schmelzreaktors 1 über eine mit einer Gasschleuse 27 versehene Abgasleitungsöffnung 28 ausgetragen. Die im Zuge des Schmelzprozesses entstandene Schlacke bzw. die Metallschmelze werden über den Schlacken- bzw. Badabstich 29 und 30 aus dem Schmelzreaktor ausgetragen.

Durch Verwendung der Prozeßgase aus der Vergasungsreaktion der Shredderleichtfraktion in dem Schmelzreaktor wird sowohl die in den Prozeßgasen enthaltene Energie für den Einschmelzprozeß verwendet, sowie gleichzeitig eine Unterdrückung der thermischen Dissoziation in dem Schmelzreaktor bei hohen Temperaturen erreicht.

## Patentansprüche

1. Verfahren zum kontinuierlichen Einschmelzen von Shredderschrott und Mischschrott unter Einsatz von Shredderschwer- und Shredderleichtfraktionen, dadurch gekennzeichnet, daß die Shredderleichtfraktion einer Vergasung (9) unterworfen wird und daß die Prozeßgase dieser Vergasung (9) oberhalb der Hauptbrennerebene (4) eines Schmelzreaktors (1) für die Shredderschwerfraktion und Mischschrott in den Schmelzreaktor (1) eingeblasen werden.

2. Verfahren nach Anspruch 1, dadurch gekennzeichnet, daß die Prozeßgase der Vergasung (9) über nach unten gerichtete Düsen (7,8) eingeblasen werden.

3. Verfahren nach Anspruch 1 oder 2, dadurch gekennzeichnet, daß die Prozeßgase durch ein Innenrohr der Brennerlanzen der Hauptbrennerebene (4) zugeführt werden, wobei über eine konzentrische Ringdüse Verbrennungsluft bzw. Sauerstoff eingebracht und in einem Außenrohr Erdgas zur Einstellung unterstöchiometrischer Verbrennungsbedingungen zugeführt wird.

4. Verfahren nach Anspruch 1, 2 oder 3, dadurch gekennzeichnet, daß die flüssige Schlacke des Vergasungsreaktors (9) unter Aufrechterhaltung einer Mindestmenge im Vergasungsreaktor (9) abgezogen und gegebenenfalls granuliert wird.

5. Verfahren nach einem der Ansprüche 1 bis 4, dadurch gekennzeichnet, daß bei Einsatz von Altreifen oder anderen Einsatzmaterialien mit hohem Rußanteil Dampf in den Vergasungsreaktor (9) eingedüst wird.

6. Verfahren nach einem der Ansprüche 1 bis 5, dadurch gekennzeichnet, daß die Schlackenbasizität im Schmelzreaktor (1) auf 1,8 bis 2,2, insbesondere etwa 2, eingestellt wird.

7. Verfahren nach einem der Ansprüche 1 bis 6, dadurch gekennzeichnet, daß die Schlackentemperatur im Schmelzreaktor (1) höchstens 10°C über der Liquidus-Temperatur gehalten wird

## Claims

1. Method for continuously melting down shredded scrap and mixed scrap using heavy shredded and light shredded fractions, characterised in that the light shredded fraction is subjected to a gasification operation (9), and that the process gases of this gasification operation (9) are blown into a melting reactor (1) for the heavy shredded fraction and mixed scrap above the main burner plane (4) of the melting reactor (1).

2. Method according to claim 1, characterised in that the process gases of the gasification operation (9) are blown in via downward directed tuyeres (7, 8).

3. Method according to claim 1 or 2, characterised in that the process gases are supplied through an inner pipe of the burner lances of the main burner plane (4), with combustion air or oxygen being introduced via a concentric annular tuyere and natural gas being supplied in an outer pipe to set non-stoichiometric combustion conditions.

4. Method according to claim 1, 2 or 3, characterised in that the liquid slag of the gasification reactor (9) is drawn off and possibly granulated while maintaining a minimum quantity in the gasification reactor (9).

5. Method according to one of claims 1 to 4, characterised in that steam is injected into the gasification reactor (9) when using scrap tyres or other charge materials with a high carbon black content.

6. Method according to one of claims 1 to 5, characterised in that the slag basicity in the melting reactor (1) is set to between 1.8 and 2.2, in Particular approximately 2.

7. Method according to one of claims 1 to 6, characterised in that the slag temperature in the melting reactor (1) is maintained at a maximum of 10°C above the liquidus temperature.

## Revendications

1. Procédé pour la fusion continue de mitraille déchiquetée et de mitraille mixte avec addition de fractions lourdes de mitraille et de fractions légères de mitraille, caractérisé en ce que la fraction légère de mitraille est soumise à une gazéification (9) et en ce que les gaz produits dans cette gazéification (9) sont injectés, au-dessus du plan de brûleurs principaux (4) d'un réacteur de fusion (1) de la fraction lourde de mitraille et la mitraille mixte, dans ce réacteur de fusion (1).

2. Procédé selon la revendication 1, caractérisé en ce que les gaz produits dans la gazéification (9) sont injectés par l'intermédiaire de tuyères (7,8) dirigées vers le bas.

3. Procédé selon la revendication 1 ou 2, caractérisé en ce que les gaz produits sont introduits par un tube intérieur des lances de brûleurs du plan de brûleurs principaux (4), de l'air de combustion ou de l'oxygène est introduit par l'intermédiaire d'une buse annulaire concentrique et du gaz naturel est introduit dans un tube extérieur pour un réglage de conditions infra-stoechiométriques de combustion.

4. Procédé selon les revendications 1, 2 ou 3, caractérisé en ce que le laitier fluide du réacteur de gazéification (9), dont on maintient une quantité minimale dans ce réacteur de gazéification (9), est déchargé et soumis le cas échéant à une granulation.

5. Procédé selon l'une des revendications 1 à 4, caractérisé en ce que, lors de l'addition de vieux pneumatiques ou d'autres matériaux d'addition à fort pourcentage de suie, de la vapeur est injectée dans le réacteur de gazéification (9).

6. Procédé selon l'une des revendications 1 à 5, caractérisé en ce que la basicité du laitier dans le réacteur de fusion (1) est réglée entre 1,8 et 2,2, notamment à environ 2.

7. Procédé selon l'une des revendications 1 à 6, caractérisé en ce que la température du laitier dans le réacteur de fusion (1) est maintenue au maximum à 10°C au-dessus de la température de liquidus.
